# EUROPEAN PATENT SPECIFICATION

(11) **EP 2 978 114 B1**
(45) Date of publication and mention of the grant of the patent: **28.11.2018**
(21) Application number: 14767887.4
(22) Date of filing: 23.01.2014
(51) Int. Cl.: H02M 1/32, H02M 7/483

(54) **POWER CONVERSION APPARATUS**
STROMRICHTER
APPAREIL DE CONVERSION D'ÉNERGIE

(30) Priority: 18.03.2013 JP 2013054935
(43) Date of publication of application: 27.01.2016
(73) Proprietor: Mitsubishi Electric Corporation, Chiyoda-ku Tokyo 100-8310 (JP); Toshiba Mitsubishi-Electric Industrial Systems Corporation, Tokyo 104-0031 (JP)
(72) Inventor: KOYANAGI Kimiyuki, Tokyo 100-8310 (JP); JIMICHI Takushi, Tokyo 100-8310 (JP); AZUMA Satoshi, Tokyo 100-8310 (JP); FUNAHASHI Sadao, Tokyo 108-0073 (JP); HOSOKAWA Yasuhiko, Tokyo 108-0073 (JP); TAMAI Shinzo, Tokyo 108-0073 (JP); HIGASHI Kotaro, Tokyo 108-0073 (JP)
(74) Representative: Sajda, Wolf E.
(86) International application number: PCT/JP2014/051377
(87) International publication number: WO 2014/148100

(56) References cited:
- EP-A1- 2 549 634
- EP-A1- 2 595 302
- EP-A1- 2 933 906
- WO-A1-2008/125494
- WO-A1-2011/154049
- DE-A1-102005 041 087
- JP-A- H02 202 324
- JP-A- 2011 193 615
- JP-A- 2012 010 542
- US-A- 5 986 909

## Description

### TECHNICAL FIELD

The present invention relates to a power conversion apparatus including a plurality of cell converters which are connected in cascade, and particularly relates to a technique to bypass a cell converter when abnormality of the cell converter or a DC short circuit accident occurs.

### BACKGROUND ART

A modular multilevel converter (hereinafter, referred to as MMC) employs a circuit method in which by connecting in series output terminals of cell converters each including a DC capacitor and a switching element which is controllable to be turned on and off, such as an IGBT (Insulated-Gate Bipolar Transistor), a voltage equal to or higher than the withstand voltage of the switching element is allowed to be outputted.

Such a modular multilevel converter is expected to be applied to a DC power transmission system, a reactive power compensation apparatus, and the like.

A basic configuration of an MMC is disclosed in which a plurality of cell converters are connected in cascade (in series), each cell converter is connected to the outside via two terminals, and a voltage between the two terminals is controlled to the voltage of a DC capacitor or to zero (e.g., Patent Document 1).

A configuration is disclosed in which, in order to continue operation of the MMC when the cell converter fails, a bypass circuit for causing short-circuiting of output of the cell converter is provided (e.g., Patent Document 2).

The bypass circuit is a switch for causing short-circuiting of the output of the cell converter when the cell converter fails. Since short-circuiting of output of an abnormal cell converter is caused by the bypass circuit, it is possible to continue operation as a system even when the cell converter fails.
A semiconductor protection means for providing protection against a short circuit circulation current when a DC short circuit accident occurs is disclosed as the bypass circuit (e.g., Patent Document 3). The bypass circuit is a semiconductor element through which a short circuit circulation current is caused to flow instead of a free wheel diode connected in antiparallel to the switching element, when a DC short circuit accident occurs.

If the bypass circuit has a sufficient current capacity for the short circuit circulation current, it is possible to protect the cell converter from the short circuit circulation current.

Patent Document 4 discloses a method, a computer program and a computer readable medium for maintaining a power module of a power electronics device, as well as a power module and a power converter.

Patent Document 5 discloses a converter circuit comprising at least one phase module having an upper and a lower converter valve, wherein each converter valve has at least one two-pole subsystem.

Patent Document 6 discloses that an electric power conversion device includes a plurality of cell converters connected in cascade and including main circuits, drive circuits, and self-feeding devices for supplying power to the drive circuits (4a to 4c) by being supplied with power from the main circuits.

### LIST OF CITATIONS

### PATENT DOCUMENTS

| | |
|---|---|
| Patent Document 1: | Japanese Laid-Open Patent Publication |
| | JP 2011-193 615 A (paragraphs [0044] to [0071] and FIGS. 1 and 2) |
| Patent Document 2: | Japanese Laid-Open Patent Publication |
| | JP 2010-524 426 A (translation of PCT application) (paragraphs [0027] to [0029] and FIG. 2) |
| Patent Document 3: | Japanese Laid-Open Patent Publication |
| | JP 2010-512 135 A (translation of PCT application) (paragraphs [0004] and [0026] to [0035] and FIGS. 1 to 4) |
| Patent Document 4: | EP 2 595 302 A |
| Patent Document 5: | DE 10 2005 041087 A1 |
| Patent Document 6: | EP 2 933 906 A1 |

In the inventions disclosed in Patent Documents 2 and 3, the bypass circuit is connected per cell converter. The bypass circuit needs to withstand a short circuit inrush current which is generated when the cell converter fails, to continue operation. In addition, when a DC short circuit accident occurs, the bypass circuit needs to withstand a short circuit circulation current to protect the cell converter.

Thus, the bypass circuit needs to have high current resistance characteristics and excellent explosion-proof capacity, and the cost of the bypass circuit is very high, leading to an increase in the cost of the entire power conversion apparatus.

The present disclosure describes a power conversion apparatus including a bypass circuit which allows operation to continue when a cell converter fails, is able to withstand a short circuit circulation current to protect the cell converter when a DC short circuit accident occurs, and does not cause great cost increase.

### SUMMARY OF THE INVENTION

The power conversion apparatus according to the present invention is configured as described in claim 1. When the self-feeding circuit of any of the cell converters within the cell block fails, drive power can still be supplied to the gate drive circuit the cell converter by the self-feeding circuit of the other cell converter within the same cell block.

### BRIEF DESCRIPTION OF THE DRAWINGS

- FIG. 1: is a configuration diagram according to a power conversion apparatus of which is not covered by the claims.
- FIG. 2: is a configuration diagram of a bypass circuit according to the power conversion apparatus of Example.
- FIG. 3: is an operation explanation diagram of the bypass circuit according to the power conversion apparatus of Example.
- FIG. 4: is a configuration diagram according to a power conversion apparatus of Embodiment 1 of the present invention.

### DESCRIPTION OF EMBODIMENTS

### Example not convered by the claims

Example relates to a power conversion apparatus which is configured such that a plurality of cell converters connected in cascade and each including a capacitor and switching elements are set as one cell block, each cell block includes two external connection terminals for connecting to another cell block in cascade, and a bypass circuit is connected to the external connection terminals.

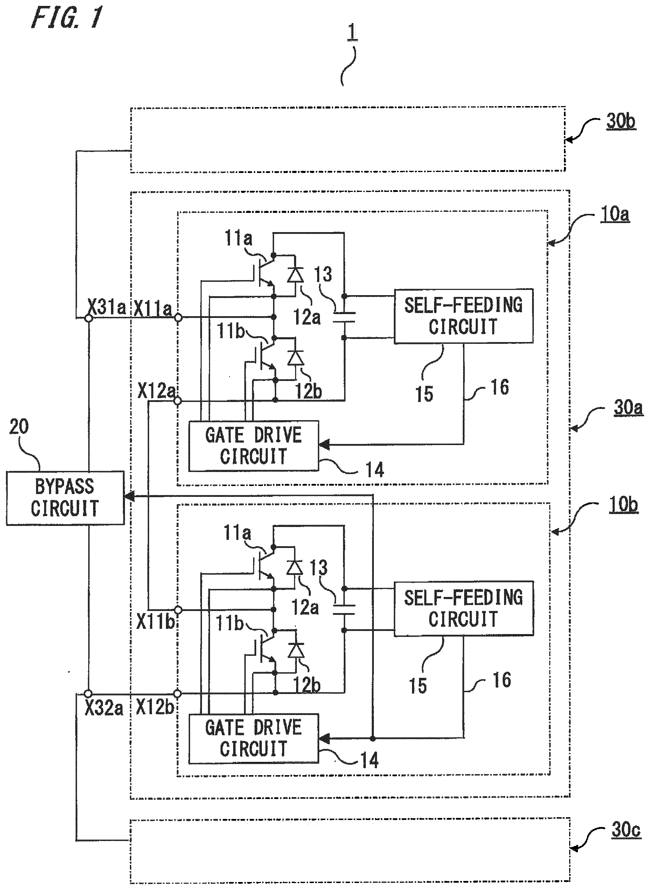

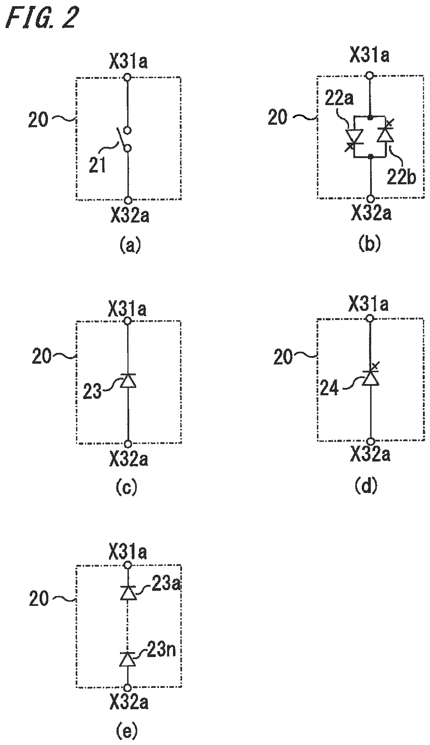

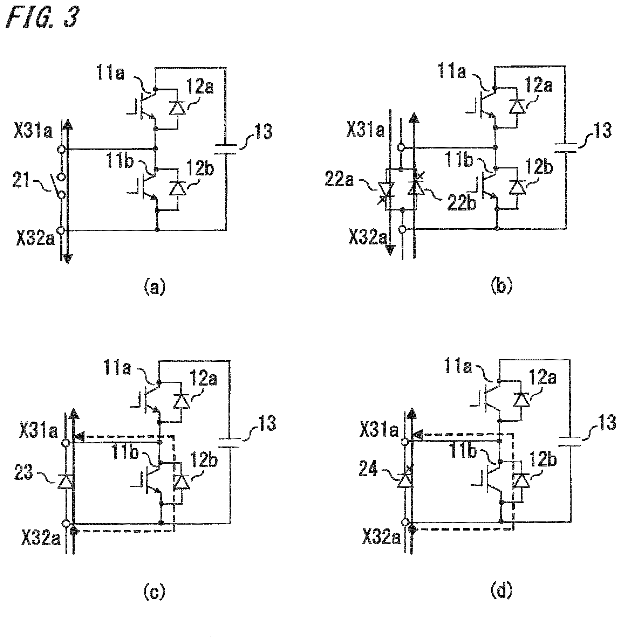

Hereinafter, the configuration and operaiton of a power conversion apparatus 1 according to Example will be described based on FIG. 1, which is a configuration diagram of the power conversion apparatus, FIG. 2, which is a configuration diagram of a bypass circuit, and FIG. 3, which is an operation explanation diagram of the bypass circuit.

FIG. 1 shows the configuration of the power conversion apparatus 1 of Example.

First, the entire configuration of the power conversion apparatus 1 will be described. In FIG. 1, the power conversion apparatus 1 includes three cell blocks 30a, 30b, and 30c (referred to as cell block 30 when collectively called) which are connected in cascade and have the same configuration, and each cell block includes two cell converters 10a and 10b (referred to as cell converter 10 when collectively called) which are connected in cascade and have the same configuration.

A bypass circuit 20 is connected to the external connection terminals of each of the cell blocks 30a, 30b, and 30c.

Next, the internal configuration of the cell converter 10 will be described. A main circuit of the cell converter 10a is a chopper circuit which includes a first switching element 11a, a second switching element 11b, and a capacitor 13.

A first free wheel diode 12a is connected in antiparallel to the first switching element 11a, and a second free wheel diode 12b is connected in antiparallel to the second switching element 11b.

It is noted that a switching element in the present invention is the first switching element 11a and the second switching element 11b.

Hereinafter, the first switching element 11a and the second switching element 11b are referred to as switching element 11 when collectively called. The first free wheel diode 12a and the second free wheel diode 12b are referred to as free wheel diode 12 when collectively called.

In the cell converter 10a, a connection point between the first switching element 11a and the second switching element 11b which are connected in series and a connection point between the second switching element 11b and the capacitor 13 serve as two output terminals X11a and X12a for connecting to another cell converter in cascade.

It is noted that in the cell converter 10b, two output terminals for connecting to another cell converter in cascade are denoted by X11b and X12b.

A gate drive circuit 14 is connected to the gate terminals of the first switching element 11a and the second switching element 11b, and outputs signals for turning on and off the first switching element 11a and the second switching element 11b. Drive power for the gate drive circuit 14 is supplied from a self-feeding circuit 15 described later. That is, drive power for controlling the switching element 11 is supplied from the self-feeding circuit 15.

The self-feeding circuit 15 takes, from both ends of the capacitor 13, a high voltage which is increased and stored in the capacitor 13 when a current flows through the capacitor 13. A DC-DC voltage conversion circuit (not shown) within the self-feeding circuit 15 converts the taken voltage to a voltage value which is suitable for driving the gate drive circuit 14. The self-feeding circuit 15 supplies its output via a first feed line 16 to the gate drive circuit 14.

The cell block 30a includes two cell converters 10a and 10b connected in cascade, and external connection terminals X31a and X32a for connecting another cell block in cascade. In addition, the cell blocks 30b and 30c include external connection terminals X31b and X32b and external connection terminals X31c and X32c (not shown), respectively. It is noted that the external connection terminals of the cell blocks are referred to as external connection terminals X31 and X32 when collectively called.

The output terminal X12a of the cell converter 10a and the output terminal X11b of the cell converter 10b are connected to each other via a power line. The external connection terminal X31a of the cell block 30a is connected to the output terminal X11a of the cell converter 10a via a power line. In addition, the external connection terminal X32a of the cell block 30a is connected to the output terminal X12b of the cell converter 10b via a power line.

The external connection terminal X31a of the cell block 30a is connected to the external connection terminal X32b of the cell block 30b via a power line, and the external connection terminal X32a of the cell block 30a is connected to the external connection terminal X31c of the cell block 30c via a power line.

Next, the function and operation of the bypass circuit 20 will be described.

The bypass circuit 20 is connected between the external connection terminals X31a and X32a of the cell block 30a.

When failure of any of the cell blocks 30a to 30c occurs, the bypass circuit 20 within the abnormal cell block promptly performs a closing operation. Thus, short-circuiting can be caused between the external connection terminals X31a and X32a of the abnormal cell block to bypass the abnormal cell block.

When a DC short circuit accident occurs, the bypass circuits 20 within all the cell blocks promptly perform a closing operation, whereby short-circuiting can be caused between the external connection terminals X31 and X32 of each of the cell blocks to allow a short circuit circulation current to bypass all the cell blocks.

In the case where the bypass circuit 20 needs drive power, drive power is supplied from the self-feeding circuit 15 of the cell converter 10a or 10b. FIG. 1 shows a configuration in which drive power is supplied from the self-feeding circuit 15 of the cell converter 10b.

The bypass circuit 20 is connected between the external connection terminals X31 and X32 of the cell block 30, that is, between the output terminal X11a of the cell converter 10a and the output terminal X12b of the cell converter 10b which are connected in cascade.

Thus, the bypass circuit 20 needs to have a withstand voltage which is twice that when the bypass circuit 20 is connected between the output terminals X11a and X12a of the cell converter 10a or between the output terminals X11b and X12b of the cell converter 10b. However, the number of the bypass circuits becomes half, which is advantageous in terms of cost and size.

Next, specific circuits for the bypass circuit 20 will be described. FIG. 2 is a diagram showing specific circuits for the bypass circuit.

When a failure of any of the cell converters 10a and 10b of the cell blocks 30a to 30c occurs, a closing operation is promptly performed by using a vacuum switch 21 in FIG. 2(a) which allows current flow in both directions, or switching elements 22a and 22b in both directions in FIG. 2(b).

When a DC short circuit accident occurs, a closing operation is promptly performed by using a diode 23 in FIG. 2(c) or a switching element 24 in FIG. 2(d) which allows current flow in a reverse direction with respect to the second switching element 11b. In addition, a plurality of diodes 23a to 23n may be connected in series as shown in FIG. 2(e).

In the case where it is desired to configure the cell block 30 with a plurality of cell converters 10 having a maximum voltage between ends which exceeds the withstand voltage capability of the bypass circuit 20, a plurality of bypass circuits which are bypass circuits 20 connected in series may be connected as one bypass circuit between the external connection terminals X31a and X32a.

For example, an increase in the number of the cell converters within the cell block is allowed by connecting in series a plurality of the bypass circuits 20 shown in FIGS. 2(a) to 2(e) to increase the withstand voltage capability of the entire bypass circuit.

Next, bypass operations of main bypass circuits in FIG. 2 will be described based on FIG. 3.

FIGS. 3(a) and 3(b) each show a circuit which bypasses the second switching element 11b when the cell converter fails, and current needs to flow in both directions. A bypass operation is performed until the cell converter is replaced with a normal one.

FIGS. 3(c) and 3(d) each show a bypass circuit which reduces the duty of the free wheel diode 12b of the second switching element 11b in a short period of time, which is within one second, when a DC short circuit accident occurs.

When a DC short circuit accident occurs, if a short circuit circulation current flows only through the free wheel diode 12b of the second switching element 11b, the free wheel diode section is broken. Thus, by introducing a bypass circuit and causing current to flow also through the bypass circuit, the duty of the free wheel diode 12b is reduced.

Failure of the cell converter and occurrence of a DC short circuit accident can be detected by measuring and monitoring the voltage and the current of each section of the power conversion apparatus 1.

When a failure of the cell converter or occurrence of a DC short circuit accident is detected, an appropriate backup circuit is selected in accordance with the situation and the type of the accident or failure, and the corresponding cell block is bypassed, whereby it is possible to continue operation of the power conversion apparatus 1 or protect the cell converter.

In Example, the case has been described in which the number of the cell converters within the cell block is two. However, the cell block may be configured with a plurality of cell converters having a maximum voltage between ends which is allowable by the withstand voltage capability of the bypass circuit. By so doing, this configuration is further advantageous in terms of cost and size.

In addition, in the case where it is desired to configure the cell block with a plurality of cell converters having a maximum voltage between ends which exceeds the withstand voltage capability of the bypass circuit, it is possible to achieve this configuration by providing a plurality of bypass circuits connected in series, as one bypass circuit.

As described above, the power conversion apparatus of Example is configured such that a plurality of cell converters connected in cascade and each including a capacitor and switching elements are set as one cell block, each cell block includes two external connection terminals for connecting to another cell block in cascade, and a bypass circuit is connected to the external connection terminals.

Thus, the power conversion apparatus of Example includes a low-cost bypass circuit having a simple configuration, is able to continue operation even when the cell converter fails, is able to protect each cell converter when a DC short circuit accident occurs, and can be reduced in size.

### Embodiment 1

A power conversion apparatus of Embodiment 1 is configured such that drive power for a block means and a gate drive circuit is supplied from self-feeding circuits of a plurality of cell converters.

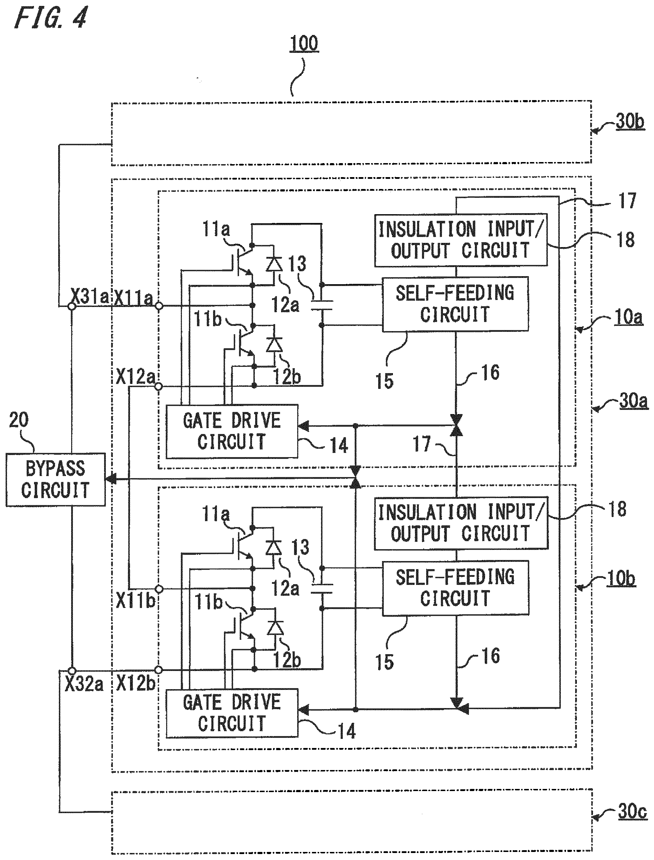

Hereinafter, regarding the configuration and operation of the power conversion apparatus 100 of Embodiment 1, the difference from the power conversion apparatus 1 of Example will be mainly described based on FIG. 4 which is a configuration diagram of the power conversion apparatus 100 of the invention as claimed.

In FIG. 4, components that are the same as or correspond to those in FIG. 1 are denoted by the same reference characters.

The entire configuration of the power conversion apparatus 100 of Embodiment 1 is the same as that of the power conversion apparatus 1 of Example. The power conversion apparatus 100 includes three cell blocks 30a, 30b, and 30c which are connected in cascade.

Each cell block includes two cell converters 10a and 10b which are connected in cascade. In addition, a bypass circuit 20 is connected to the external connection terminals of each of the cell blocks 30a, 30b, and 30c.

Next, the internal configuration of the cell converter 10 will be described. In FIG. 4, a first switching element 11a, a second switching element 11b, a first free wheel diode 12a, a second free wheel diode 12b, a capacitor 13, a first feed line 16, and a bypass circuit 20 are the same as those in Example.

A gate drive circuit 14 is connected to the gate terminals of the first switching element 11a and the second switching element 11b, and outputs signals for turning on and off the first switching element 11a and the second switching element 11b.

Drive power for the gate drive circuit 14 is supplied from the self-feeding circuits 15 of both of the cell converter 10a and the cell converter 10b within the cell block 30a.

At ▼ locations in FIG. 4, back-flow of current is prevented, for example, by using diodes in a butting manner.

Each self-feeding circuit 15 takes, from both ends of the capacitor 13, a high voltage which is increased and stored in the capacitor 13 when a current flows through the capacitor 13. A DC-DC voltage conversion circuit (not shown) within the self-feeding circuit 15 converts the taken voltage to a voltage value which is suitable for driving the gate drive circuit 14.

The self-feeding circuit 15 supplies its first output via the first feed line 16 to the gate drive circuit 14 of the cell converter provided with this self-feeding circuit 15. In addition, the self-feeding circuit 15 supplies its second output via a second feed line 17 to the gate drive circuit 14 of the other cell converter within the same cell block.

In the case where the bypass circuit 20 needs drive power, the bypass circuit 20 is supplied with drive power from the self-feeding circuits 15 of both of the cell converters 10a and 10b.

The second feed line 17 allows for supply to the gate drive circuit 14 of the other cell converter by passing through an insulation input/output circuit 18 having a dielectric strength equal to or higher than a potential difference between the cell converters between which power is transferred.

As the insulation input/output circuit 18, for example, a circuit obtained by combining a DC/AC converter, an insulating transformer, and an AC/DC converter can be used.

In the power conversion apparatus 100 of Embodiment 1, when the self-feeding circuit 15 of any of the cell converters 10a and 10b within the cell block 30a fails, if the self-feeding circuit 15 of the other cell converter normally operates, it is possible to operate the bypass circuit 20 for the cell block 30a.

It is also possible to improve the reliability of the drive power for the gate drive circuit 14 of the cell converter 10, and thus the power conversion apparatus 100 can stably continue operation of a system.

As described above, the power conversion apparatus 100 of Embodiment 1 is further configured such that the drive power for the block means and the gate drive circuit is supplied from the self-feeding circuits of the plurality of cell converters. Thus, in addition to the effects of Example, it is possible to improve the reliability of the drive power for the bypass circuit and the gate drive circuit of each cell converter, thereby more stably continuing operation of the system.

In Embodiments 1 and 2, the case has been shown in which each switching element and each free wheel diode are made of silicon. However, each switching element and each free wheel diode may be formed of a wide bandgap semiconductor which has a wider bandgap than silicon. Examples of a wide bandgap semiconductor include silicon carbide, a gallium-nitride-based material, and diamond.

In the case of using a wide bandgap semiconductor, the withstand voltage of a semiconductor element can be increased, whereby the number of the cell converters connected in series in the entire system can be reduced.

In addition, when a wide bandgap semiconductor is used as a bidirectional switching element, a reverse diode, or a reverse switching element of the bypass circuit, the number of the cell converters connected in series and forming the cell block can be increased with an increase in the withstand voltage of the bypass circuit, and thus the number of the cell blocks, that is, the number of the bypass circuits, can be further reduced. Moreover, high-speed semiconductor switching can be performed, and thus an input current or output voltage having a reduced harmonic component can be obtained.

It is noted that, within the scope of the present invention, the above embodiments may be freely combined with each other, or each of the above embodiments may be modified or abbreviated as appropriate.

### INDUSTRIAL APPLICABILITY

The present invention relates to a power conversion apparatus which includes cell converters, and is widely applicable to a DC power transmission system, a reactive power compensation apparatus, and the like.

## Claims

1. A power conversion apparatus (100) comprising a plurality of cell blocks (30a) connected in cascade, each cell block (30a) including two cell converters (10a, 10b) connected in cascade, each cell converter (10a, 10b) including a switching element (11a, 11b), a capacitor (13), a self-feeding circuit (15) coupled across said capacitor (13), an insulation input/output circuit (18), a gate drive circuit (14), a first feed line (16) and a second feed line (17), wherein the cell block (30a) includes two external connection terminals (X31a, X32a) for connecting to another cell block (30b, 30c) in cascade, and a bypass circuit (20) is connected between the two external connection terminals (X31a, X32a) of each cell block (30a),
wherein within each cell converter (10a, 10b), a first power output of the self-feeding circuit (15) is connected to the gate drive circuit (14) via a first feed line (16), a second power output of the self-feeding circuit (15) is connected to an input of the insulation input/output circuit (18), and an output of the insulation input/output circuit (18) is connected to the second feed line (17),
wherein for each cell converter (10a, 10b), the second feed line (17), which is connected to the output of the insulation input/output circuit (18), is coupled to the first feed line (16) of the other cell converter (10a, 10b) within the same cell block (30a), so as to supply power from the self-feeding circuit (15) to the other cell converter (10a, 10b) by passing through the insulation input/output circuit (18).

2. The apparatus (100) according to claim 1, wherein a bypass circuit (20) is connected to the two external connection terminals (X31a, X32a) of each cell block (30a).

3. The apparatus (100) according to claim 1 or 2, wherein drive power for the bypass circuit (20) and drive power for controlling the switching element (11a, 11b) of the cell converter (10a, 10b) are supplied from the self-feeding circuit (15) of the plurality of cell converters (10a, 10b) of the cell block (30a).

4. The apparatus (100) according to any one of claims 1 to 3, wherein the bypass circuit (20) includes a vacuum switch (21).

5. The apparatus (100) according to any one of claims 1 to 3, wherein the bypass circuit (20) includes a bidirectional switching element (22a, 22b).

6. The apparatus (100) according to any one of claims 1 to 3, wherein the bypass circuit (20) includes a diode (23) having a reverse direction with respect to the switching element (11a, 11b) of the cell converter.

7. The apparatus (100) according to any one of claims 1 to 3, wherein the bypass circuit (20) includes a switching element (24) having a reverse direction with respect to the switching element (11a, 11b) of the cell converter (10a, 10b).

8. The apparatus (100) according to any one of claims 1 to 7, wherein the switching element (11a, 11b) of each cell converter (10a, 10b) is formed of a wide bandgap semiconductor which has a wider bandgap than silicon.

9. The apparatus (100) according to claim 5 or 7, wherein the switching element (22a, 22b, 24) of the bypass circuit (20) is formed of a wide bandgap semiconductor which has a wider bandgap than silicon.

10. The apparatus (100) according to claim 6, wherein the diode (23) of the bypass circuit (20) is formed of a wide bandgap semiconductor which has a wider bandgap than silicon.

11. The apparatus (100) according to any one of claims 8 to 10, wherein the wide bandgap semiconductor is silicon carbide, a gallium-nitride-based material, or diamond.

12. The apparatus (100) according to any one of claims 1 to 11, wherein a plurality of the cell blocks (30) connected with the bypass circuit (20) are connected in cascade.

## Patentansprüche

1. Leistungswandlervorrichtung (100), die eine Vielzahl von Zellblöcken (30a) aufweist, die kaskadenartig verbunden sind, wobei jeder Zellblock (30a) zwei Zellwandler (10a, 10b) aufweist, die kaskadenartig verbunden sind, wobei jeder Zellwandler (10a, 10b) Folgendes aufweist: ein Schaltelement (11a, 11b), einen Kondensator (13), eine Self-Feeding-Schaltung, die parallel zu dem Kondensator (13) geschaltet ist, eine Isolations-Eingangs-/Ausgangsschaltung (18), eine Gate-Treiberschaltung (14), eine erste Zuleitung (16) und eine zweite Zuleitung (17),
wobei der Zellblock (30a) zwei externe Verbindungsanschlüsse (X31a, X32a) aufweist, um einen weiteren Zellblock (30b, 30c) kaskadenartig anzuschließen,
und
wobei eine Bypass-Schaltung (20) zwischen die beiden externen Verbindungsanschlüsse (X31a, X32a) für jeden Zellblock (30a) geschaltet ist,
wobei in jedem Zellwandler (10a, 10b) ein erster Leistungsausgang der Self-Feeding-Schaltung (15) mit der Gate-Treiberschaltung (14) über eine erste Zuleitung (16) verbunden ist, ein zweiter Leistungsausgang der Self-Feeding-Schaltung (15) mit einem Eingang der Isolations-Eingangs-/Ausgangs-Schaltung (18) verbunden ist, und ein Ausgang der Isolations-Eingangs-/Ausgangs-Schaltung (18) mit der zweiten Zuleitung (17) verbunden ist,
wobei für jeden Zellwandler (10a, 10b), die zweite Zuleitung (17), die mit dem Ausgang der Isolations-Eingangs-/Ausgangs-Schaltung (18) verbunden ist, mit der ersten Zuleitung (16) des anderen Zellwandlers (10a, 10b) in demselben Zellblock (30a) verbunden ist, um so Leistung von der Self-Feeding-Schaltung (15) dem anderen Zellwandler (10a, 10b) durch die Isolations-Eingangs-/Ausgangs-Schaltung (18) zur Verfügung zu stellen.

2. Vorrichtung (100) nach Anspruch 1,
wobei eine Bypass-Schaltung (20) mit den beiden externen Verbindungsanschlüssen (X31a, X32a) von jedem Zellblock (30a) verbunden ist.

3. Vorrichtung (100) nach Anspruch 1 oder 2,
wobei die Antriebsleistung für die Bypass-Schaltung (20) und die Antriebsleistung zum Steuern des Schaltelements (11a, 11b) des Zellwandlers (10a, 10b) von der Self-Feeding-Schaltung (15) der Vielzahl von Zellwandlern (10a, 10b) des Zellblocks (30a) geliefert werden.

4. Vorrichtung (100) nach einem der Ansprüche 1 bis 3,
wobei die Bypass-Schaltung (20) einen Vakuumschalter (21) aufweist.

5. Vorrichtung (100) nach einem der Ansprüche 1 bis 3,
wobei die Bypass-Schaltung (20) ein bidirektionales Schaltelement (22a, 22b) aufweist.

6. Vorrichtung nach einem der Ansprüche 1 bis 3,
wobei die Bypass-Schaltung (20) eine Diode (23) aufweist, die eine umgekehrte Richtung bezüglich des Schaltelements (11a, 11b) des Zellwandlers besitzt.

7. Vorrichtung nach einem der Ansprüche 1 bis 3,
wobei die Bypass-Schaltung (20) ein Schaltelement (24) aufweist, das eine umgekehrte Richtung bezüglich des Schaltelements (11a, 11b) des Zellwandlers (10a, 10b) besitzt.

8. Vorrichtung nach einem der Ansprüche 1 bis 7,
wobei das Schaltelement (11a, 11b) von jedem Zellwandler (10a, 10b) aus einem Halbleiter mit großem Bandabstand ausgebildet ist, der einen größeren Bandabstand als Silicium hat.

9. Vorrichtung nach Anspruch 5 oder 7,
wobei das Schaltelement (22a, 22b, 24) der Bypass-Schaltung (20) aus einem Halbleiter mit großem Bandabstand ausgebildet ist, der einen größeren Bandabstand als Silicium hat.

10. Vorrichtung (100) nach Anspruch 6,
wobei die Diode (23) der Bypass-Schaltung (20) aus einem Halbleiter mit großem Bandabstand ausgebildet ist, der einen größeren Bandabstand hat als Silicium.

11. Vorrichtung (100) nach einem der Ansprüche 8 bis 10,
wobei der Halbleiter mit großem Bandabstand Siliciumcarbid, ein Galliumnitrid-basiertes Material oder Diamant ist.

12. Vorrichtung nach einem der Ansprüche 1 bis 11,
wobei eine Vielzahl von Zellblöcken (30), die mit der Bypass-Schaltung (20) verbunden sind, kaskadenartig verbunden sind.

## Revendications

1. Appareil de conversion d'énergie (100) comprenant une pluralité de blocs de cellules (30a) connectés en cascade, chaque bloc de cellules (30a) incluant deux convertisseurs en cellules (10a, 10b) connectés en cascade, chaque convertisseur en cellules (10a, 10b) incluant un élément de commutation (11a, 11b), une capacité (13), un circuit à auto-alimentation (15) couplé aux bornes de ladite capacité (13), un circuit d'entrée/sortie à isolation (18), un circuit pilote de grille (14), une première ligne d'alimentation (15) et une seconde ligne d'alimentation (17), dans lequel le bloc de cellules (30a) inclut deux bornes de connexion externes (X31a, X32a) pour la connexion à un autre bloc de cellules (30b, 30c) en cascade, et un circuit de by-pass (20) est connecté entre les deux bornes de connexion externes (X31a, X32a) de chaque bloc de cellules (30a),
dans lequel, à l'intérieur de chaque convertisseur en cellules (10a, 10b), une première sortie de puissance du circuit à auto-alimentation (15) est connectée au circuit pilote de grille (14) via une première ligne d'alimentation (16), et une seconde sortie de puissance du circuit à auto-alimentation (15) est connectée à une entrée du circuit d'entrée/sortie à isolation (18), et une sortie du circuit d'entrée/sortie à isolation (15) est connectée à la seconde ligne d'alimentation (17),
dans lequel, pour chaque convertisseur en cellules (10a, 10b), la seconde ligne d'alimentation (17) qui est connectée à la sortie du circuit d'entrée/sortie à isolation (18), est couplée à la première ligne d'alimentation (16) de l'autre convertisseur en cellules (10a, 10b) à l'intérieur du même bloc de cellules (30a), de manière à alimenter une puissance depuis le circuit à auto-alimentation (15) vers l'autre convertisseur en cellules (10a, 10b) en traversant le circuit d'entrée/sortie à isolation (18).

2. Appareil (100) selon la revendication 1,
dans lequel un circuit de by-pass est connecté aux deux bornes de connexion externes (X31a, X32a) de chaque bloc de cellules (30a).

3. Appareil (100) selon la revendication 1 ou 2,
dans lequel la puissance pilote pour le circuit de by-pass (20) et la puissance pilote pour commander l'élément de commutation (11a, 11b) du convertisseur en cellules (10a, 10b) sont alimentées depuis le circuit à auto-alimentation (15) de la pluralité de convertisseurs en cellules (10a, 10b) du bloc de cellules (30a).

4. Appareil (100) selon l'une quelconque des revendications 1 à 3,
dans lequel le circuit de by-pass (20) inclut un commutateur sous vide (21).

5. Appareil (100) selon l'une quelconque des revendications 1 à 3,
dans lequel le circuit de by-pass (20) inclut un élément de commutation bidirectionnel (22a, 22b).

6. Appareil (100) selon l'une quelconque des revendications 1 à 3,
dans lequel le circuit de by-pass (20) inclut une diode (23) ayant une direction inverse par rapport à l'élément de commutation (11a, 11b) du convertisseur en cellules.

7. Appareil (100) selon l'une quelconque des revendications 1 à 3,
dans lequel le circuit de by-pass (20) inclut un élément de commutation (24) ayant une direction inverse par rapport à l'élément de commutation (11a, 11b) du convertisseur en cellules (10a, 10b).

8. Appareil (100) selon l'une quelconque des revendications 1 à 7,
dans lequel l'élément de commutation (11a, 11b) de chaque convertisseur en cellules (10a, 10b) est formé d'un semi-conducteur à large saut de bande qui présente un saut de bande plus large que le silicium.

9. Appareil (100) selon la revendication 5 ou 7,
dans lequel l'élément de commutation (22a, 22b, 24) du circuit de by-pass (20) est formé d'un semi-conducteur à large saut de bande qui présente un saut de bande plus large que le silicium.

10. Appareil (100) selon la revendication 6,
dans lequel la diode (23) du circuit de by-pass (20) est formée d'un semi-conducteur à large saut de bande qui présente un saut de bande plus large que le silicium.

11. Appareil (100) selon l'une quelconque des revendications 8 à 10,
dans lequel le semi-conducteur à large saut de bande est du carbure de silicium, un matériau à base de nitrure de gallium, ou du diamant.

12. Appareil (100) selon l'une quelconque des revendications 1 à 11,
dans lequel une pluralité de blocs de cellules (30) connectés au circuit de by-pass (20) sont connectés en cascade.
